# DEMANDE DE BREVET EUROPEEN

(11) **EP 1 419 829 A1**
(43) Date de publication de la demande: **19.05.2004**
(21) Numéro de dépôt: 03356181.2
(22) Date de dépôt: 18.11.2003
(51) Int. Cl.: B08B 3/04, B08B 1/02, C11D 3/02, C11D 3/43

(54) **Procédé de recyclage de support d'impression imprimé de type film plastique et installation pour la mise en oeuvre dudit procédé**

(30) Priorité: 18.11.2002 FR 0214552
(71) Demandeur: Duchenaud Uniflexo, 38300 Bourgoin Jallieu (FR)
(72) Inventeur: Piolat, Armand, 38790 Saint Georges D'Esperanche (FR)
(74) Mandataire: Guerre, Dominique

(57) **Abrégé**

Procédé de recyclage de film plastique (12), utilisé comme support d'impression, comportant au moins une étape de désencrage, une étape de rinçage et une étape de séchage caractérisé en ce que l'étape de désencrage comprend deux phases consécutives et/ou simultanées de trempage dudit support dans un produit lessiviel et de brossage des surfaces dudit support et installation pour le recyclage de support d'impression de type film plastique caractérisée en ce qu'elle comporte :
- un module de désencrage comprenant une cuve (14) contenant le produit lessiviel, un ensemble de rouleaux de guidage (13) entraînés en rotation et synchronisés par rapport à la vitesse d'enroulage, et au moins un ensemble d'axes de brossage (1,2), entraînés en rotation inverse du défilement du film,
- un module de rinçage (3) comprenant une cuve (16) contenant le produit de rinçage et un ensemble de rouleaux de guidage (13) entraînés en rotation et synchronisés par rapport à la vitesse d'enroulage
- un module de séchage (4).

## Description

La présente invention a trait au domaine du recyclage des supports d'impression, et plus particulièrement des supports d'impression de type films plastiques.

Des pertes importantes de ces supports ont lieu lors des opérations d'impression ; on peut chiffrer ces pertes à environ 7 à 10 % de la production de films imprimés. Les causes de ces pertes sont multiples ; on citera, par exemple, les longueurs de film utilisées pour le calage des machines avant le lancement de longues productions, les erreurs d'impression dues à différents phénomènes comme les erreurs de gravure, les mauvaises formulations d'encre, les mauvais traitements du film plastique. Ces pertes sont aujourd'hui pratiquement impossibles à réduire.

Ces déchets sont actuellement recyclés en matière, mais si les films utilisés sont des films composites, ce recyclage est très complexe et coûteux.

Les pertes ne pouvant être réduites, et le recyclage matière étant insatisfaisant et coûteux en raison de la nature des films et également en raison de l'impression qu'ils portent, le recyclage de ces films reste un problème important, avec des répercutions non négligeables sur les coûts de production.

La présente invention permet de résoudre les problèmes liés au recyclage et permet également la réutilisation de ces supports d'impression sans avoir à recourir au recyclage matière.

La présente invention concerne ainsi un procédé de recyclage de film plastique, utilisé comme support d'impression, comportant au moins une étape de désencrage, une étape de rinçage et une étape de séchage, caractérisé en ce que l'étape de désencrage comprend deux phases consécutives et/ou simultanées de trempage dudit support dans un produit lessiviel et de brossage des surfaces dudit support.

Selon l'invention ledit procédé est continu, du fait qu'il s'applique à des films supports d'impression se présentant en laizes, permettant leur entraînement par des rouleaux et ne nécessitant pas la présence de systèmes de transport de type bandes, tapis ou chariots.

L'invention concerne ainsi un procédé permettant le recyclage de film imprimé sur les deux faces.

Elle concerne également ledit procédé, caractérisé en ce que le produit lessiviel comprend de 1 à 15 % de tensioactif non ionique, de 1 à 30 % de solvant organique et de 10 à 85 % de base minérale aqueuse.

Elle concerne également ledit procédé, caractérisé en ce que le tensioactif non ionique est choisi parmi les alcools alcooxylés et/ou parmi les alkylpolyglucosides (APG) ou leurs mélanges.

Elle concerne également ledit procédé, caractérisé en ce que le solvant organique est choisi parmi le phénoxyéthanol, les solvants organiques lourds comme par exemple le butadigol (2-(2-butoxy-ethoxy)éthanol) et/ou les solvants légers comme l'alcool isopropylique, et leurs mélanges.

Elle concerne également ledit procédé, caractérisé en ce que la base minérale aqueuse est la soude ou la potasse.

Elle concerne également ledit procédé, caractérisé en ce que le produit lessiviel comprend, en outre, des additifs destinés à améliorer les propriétés olfactives comme la triéthylamine.

Selon l'invention, l'étape de désencrage est effectuée à une température comprise entre 5 et 70°C.

L'invention concerne également l'installation de mise en oeuvre du procédé.

L'invention concerne ainsi, une installation pour le recyclage de film plastique utilisé comme support d'impression, caractérisée en ce qu'elle comporte :
- un module de désencrage comprenant une cuve contenant le produit lessiviel, un ensemble de rouleaux de guidage entraînés en rotation et synchronisés par rapport à la vitesse d'enroulage, et au moins un ensemble d'axes de brossage, entraînés en rotation inverse du défilement du film,
- un module de rinçage comprenant une cuve contenant le produit de rinçage et un ensemble de rouleaux de guidage entraînés en rotation et synchronisés par rapport à la vitesse d'enroulage
- un module de séchage comprenant un système de ventilation.

Dans un mode de réalisation préféré le module de rinçage comporte en outre un ou plusieurs axes de brossage entraînés en rotation inverse du défilement du film pour parfaire le rinçage.

Dans un mode de réalisation préféré le module de désencrage comporte en outre un ensemble de racles permettant d'éliminer le produit lessiviel de la surface du support d'impression traité avant le transfert dudit support dans le module de rinçage et le module de rinçage comporte en outre un ensemble de racles permettant d'éliminer le produit de rinçage de la surface du support d'impression rincé avant son transfert dans le module de séchage.

Dans un mode de réalisation, le module de désencrage comporte, en outre, un système de chauffage permettant de chauffer le produit lessiviel.

Dans un autre mode de réalisation, le module de désencrage comporte, en outre, des moyens de régénération en continu du produit lessiviel.

Selon l'invention, le traitement des deux faces des supports d'impression est possible simultanément.

Tous les types de films plastiques utilisés comme support d'impression, sont susceptibles d'être traités par le procédé selon l'invention et dans l'installation selon l'invention.

On citera plus particulièrement les films polyéthylène, polypropylène, polyester et/ou polyamide, les films composites ou complexes comme par exemple les films polyester/polyéthylène (PET/PE) ou polyester/polypropylène bi-orienté (PET/BPP), ces films complexes pouvant être obtenus par co-extrusion ou par enduction.

L'invention concerne ainsi un procédé selon l'invention caractérisé en ce que le film plastique utilisé comme support d'impression, est choisi parmi les films polyéthylène.

L'invention concerne ainsi un procédé selon l'invention caractérisé en ce que le film plastique utilisé comme support d'impression, est un film polypropylène.

L'invention concerne ainsi un procédé selon l'invention caractérisé en ce que le film plastique utilisé comme support d'impression, est un film polyester et/ou polyamide.

L'invention concerne ainsi un procédé selon l'invention caractérisé en ce que le film plastique utilisé comme support d'impression, est choisi parmi les films composites ou complexes comme par exemple les films polyester/polyéthylène (PET/PE) ou polyester/polypropylène bi-orienté (PET/BPP) obtenus par co-extrusion ou par enduction.

Le procédé selon l'invention est utilisable quelles que soient les techniques d'impression utilisées comme par exemple la flexographie.

L'invention concerne ainsi un procédé selon l'invention caractérisé en ce que l'impression sur le film plastique utilisé comme support d'impression a été effectuée par flexographie.

L'invention concerne ainsi un procédé selon l'invention caractérisé en ce que l'impression sur le film plastique utilisé comme support d'impression a été effectuée par lithographie ou offset.

L'invention concerne ainsi un procédé selon l'invention caractérisé en ce que l'impression sur le film plastique utilisé comme support d'impression a été effectuée par héliogravure.

L'invention concerne ainsi un procédé selon l'invention caractérisé en ce que l'impression sur le film plastique utilisé comme support d'impression a été effectuée par typographie.

On entend par « étape de désencrage », la solubilisation des encres et l'élimination complète des impressions présentes sur le support de telle façon que le support soit réutilisable pour l'impression. Cette étape de désencrage est réalisée en utilisant des moyens chimiques et des moyens physiques. Les moyens chimiques sont dans un mode de réalisation préférentiel le trempage dudit support dans un produit lessiviel.

Le produit lessiviel sera de préférence en phase aqueuse pour respecter les normes environnementales. Il devra néanmoins comprendre des solvants pour faciliter la solubilisation de l'encre et des graisses, des agents tensioactifs pour leur action mouillante et faiblement moussante mais également en tant qu'agent hydrotrope et une base alcaline pour son action détergente. Il pourra, en outre, comprendre des additifs pour améliorer, par exemple, sa stabilité et ses propriétés olfactives.

Les moyens physiques sont dans un mode de réalisation préférentiel des moyens de brossage du support d'impression sur ses deux faces. Ces moyens de brossage seront, par exemple, des axes de brossage entraînés en rotation inverse du défilement du film. Ces moyens permettent de parfaire l'action du produit lessiviel et l'élimination complète de toute trace d'impression, sans dégrader ledit support. Pour améliorer encore cette élimination de l'encre du support d'impression imprimé à traiter, cette étape de désencrage peut être effectuée à une température supérieure à la température ambiante mais, toutefois, inférieure à la température de dégradation des films traités. A cet effet, le produit lessiviel sera porté à la température voulue par la mise en oeuvre de moyens de chauffage et de régulation bien connus de l'homme de l'art, comme par exemple un thermoplongeur asservi à une régulation de température.

Dans un mode réalisation préférentiel, pendant l'étape de désencrage, le produit lessiviel sera recyclé en continu par la mise en oeuvre d'un groupe de filtration du produit lessiviel, et éventuellement, un système de régénération, en fonction du métrage de support recyclé, pourra également être ajouté à l'installation.

A la fin de cette étape de désencrage, et afin de ne pas entraîner de produit lessiviel dans la suite du procédé, une étape intermédiaire d'élimination du produit lessiviel peut être réalisée au moyen, par exemple, de racles.

On entend par « étape de rinçage », une étape permettant l'élimination de toute trace d'encre et l'élimination de toute trace de produit lessiviel.

Cette étape de rinçage peut être réalisée par simple trempage du support d'impression traité dans un produit de rinçage comme par exemple de l'eau, ou par trempage suivi d'un brossage identique à celui mis en oeuvre à l'étape de désencrage.

On entend par « étape de séchage », une étape permettant d'éliminer toute trace de produit de rinçage de la surface du support d'impression recyclé. Ce séchage peut, par exemple, être effectué en mettant en oeuvre un système de ventilation, un système de chauffage ou un système mixte ventilation et chauffage.

Dans une variante de réalisation, un dispositif permettant de réaliser un traitement CORONA sur la surface du film après séchage sera intégré à l'installation de mise en oeuvre, pour améliorer ou restaurer les propriétés « d'imprimabilité » du support d'impression recyclé.

D'autres caractéristiques et avantages ressortiront de la description qui suit, en référence au dessin schématique annexé dont l'unique figure représente en coupe transversale une forme d'exécution de cette installation de mise en oeuvre du procédé.

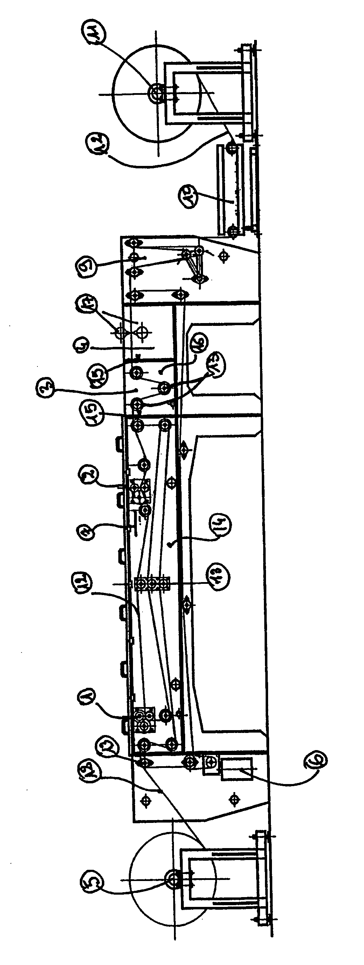

Sur la figure 1, la référence numérique 12 désigne de manière générale le support d'impression à traiter ou traité.

L'installation comprend :
a) un dérouleur 5, à deux positions, avec freins.
b) un ensemble de rouleaux de guidage 13 entraînés en rotation et synchronisés par rapport à la vitesse d'enroulage par un moteur maître 6.
c) un module de désencrage composé d'une cuve de traitement 14 contenant le produit lessiviel, ledit module de désencrage comprenant :
   - un ensemble de rouleaux de guidage 13 entraînés en rotation permettant un cheminement du support à traiter immergé dans ledit produit lessiviel dans ladite cuve de traitement 14,
   - un ensemble de deux axes de brossage 1, cet ensemble entraîné en rotation à l'inverse du défilement permet de parfaire l'action du produit lessiviel sur une face du support à traiter,
   - un deuxième ensemble de deux axes de brossage 2, cet ensemble, entraîné en rotation à l'inverse du défilement, permet de parfaire l'action lessivielle sur l'autre face du support à traiter,
   - un ensemble de joints racleurs 15, en sortie de la cuve de traitement 14, permet d'éliminer le produit lessiviel des surfaces du support d'impression traité avant le passage dans le module de rinçage.
      Le niveau 7 de produit de traitement lessiviel est maintenu dans la cuve 14 du module de désencrage par la mise en oeuvre d'un groupe de pompage et de filtration en continu, non représenté, du produit lessiviel.
      Un ensemble pour la régénération du produit lessiviel, non représenté, est installé en parallèle à ladite installation ; il s'agit par exemple d'un ensemble de trois cuves permettant, dans une première cuve la vidange complète de la cuve de traitement 14, dans une deuxième cuve une réserve de produit lessiviel propre permettant de maintenir le niveau 7 dans la cuve de traitement 14, et une troisième cuve permettant la récupération du produit lessiviel souillé après traitement.
      Un système de chauffage non représenté, avec thermoplongeurs et régulation de température, peut, de manière optionnelle, être installé dans la cuve de traitement 14.
d) un module de rinçage 3, composé d'une cuve 16, contenant le liquide de rinçage comprenant :
   - un ensemble de rouleaux de guidage entraînés en rotation 13 permet un cheminement du support à rincer, immergé dans ledit liquide de rinçage dans ladite cuve de rinçage 16.
   - un ensemble de joints racleurs 15, en sortie de la cuve de rinçage 16, permet d'éliminer la solution de rinçage de la surface du support rincé avant le passage dudit support dans le module de séchage.

Optionnellement, des ensembles d'axes de brossage identiques à ceux utilisés dans le module de traitement lessiviel peuvent être installés.

Les rouleaux de guidage entraînés en rotation 13, immergés dans le produit de traitement lessiviel et/ou dans le liquide de rinçage peuvent être associés à d'autres rouleaux entraînés en rotation non représentés, de manière que le support à traiter ou traité (en phase de rinçage) décrive des trajectoires complexes, de manière à augmenter respectivement la durée de traitement et l'efficacité dudit traitement et/ou dudit rinçage.
e) un module de séchage 4, composé d'un turbo compresseur utilisé pour le soufflage de l'air, avec chambre de répartition d'air, 17 (turbo soufflante avec plenum de soufflage) de part et d'autre du support d'impression traité.
f) un module de réglage de la tension 9.
g) un module de guidage de bande 10.
h) un enrouleur avec moteur esclave 11.

Une installation selon l'invention pour la mise en oeuvre du procédé de recyclage, ayant les caractéristiques suivantes a été réalisée :
- la laize des bobines est de 1250 mm ;
- les vitesses de déroulement dépendantes du type de films à traiter sont environ de 20 m/mm pour des films simples et de 50 m/mm pour des films complexes ;
- les températures de traitement sont au maximum de 60°C, sans que les films traités ne subissent aucune détérioration ;
- les consommations de produit lessiviel sont limitées à environ 100 I par tonne de support traité.

Des essais d'impression sur les supports traités par le procédé selon l'invention et, obtenus avec l'installation ci-dessus décrite, ont permis d'obtenir des résultats de qualité comparable avec celle obtenue par impression sur des supports identiques vierges.

Les supports d'impression traités par le procédé selon l'invention, pourront être utilisés, soit en recyclage complet au titre de support d'impression, soit pour des essais de réglage, soit pour la valorisation des déchets.

## Revendications

1. Procédé de recyclage de film plastique, utilisé comme support d'impression, comportant au moins une étape de désencrage, une étape de rinçage et une étape de séchage **caractérisé en ce que** l'étape de désencrage comprend deux phases consécutives et/ou simultanées de trempage dudit support dans un produit lessiviel et de brossage des surfaces dudit support.

2. Procédé selon la revendication 1, **caractérisé en ce que** le produit lessiviel comprend de 1 à 15 % du tensioactif non ionique, de 1 à 30 % de solvant organique et de 10 à 85 % de base minérale aqueuse.

3. Procédé selon la revendication 2, **caractérisé en ce que** le tensioactif non ionique est choisi parmi les alcools alcooxylés et/ou parmi les alkylpolyglucosides ou leurs mélanges.

4. Procédé selon la revendication 2, **caractérisé en ce que** le solvant organique est choisi parmi le phénoxyéthanol, les solvants organiques lourds comme par exemple le butadigol (2-(2-butoxy-ethoxy)éthanol) et/ou les solvants légers comme l'alcool isopropylique, et leurs mélanges

5. Procédé selon la revendication 2, **caractérisé en ce que** la base minérale aqueuse est la soude ou la potasse.

6. Procédé selon la revendication 1, **caractérisé en ce que** le produit lessiviel comprend, en outre, un additif destiné à améliorer les propriétés olfactives comme la triethylamine.

7. Procédé selon l'une quelconque des revendications précédentes, **caractérisé en ce que** l'étape de désencrage est effectuée à une température comprise entre 5 et 70°C.

8. Procédé selon l'une quelconque des revendications précédentes **caractérisé en ce que** le film plastique utilisé comme support d'impression, est choisi parmi les films polyéthylène.

9. Procédé selon l'une quelconque des revendications précédentes **caractérisé en ce que** le film plastique utilisé comme support d'impression, est un film polypropylène.

10. Procédé selon l'une quelconque des revendications précédentes **caractérisé en ce que** le film plastique utilisé comme support d'impression, imprimé est un film polyester et/ou polyamide.

11. Procédé selon l'une quelconque des revendications précédentes **caractérisé en ce que** le film plastique utilisé comme support d'impression, est choisi parmi les films composites ou complexes comme par exemple les films polyester/polyéthylène (PET/PE) ou polyester/polypropylène bi-orienté (PET/BPP) obtenus par co-extrusion ou par enduction.

12. Installation pour le recyclage de support d'impression de type film plastique **caractérisée en ce qu'**elle comporte :
- un module de désencrage comprenant une cuve contenant le produit lessiviel, un ensemble de rouleaux de guidage entraînés en rotation et synchronisés par rapport à la vitesse d'enroulage, et au moins un ensemble d'axes de brossage, entraînés en rotation inverse du défilement du film,
- un module de rinçage comprenant une cuve contenant le produit de rinçage et un ensemble de rouleaux de guidage entraînés en rotation et synchronisés par rapport à la vitesse d'enroulage
- un module de séchage.

13. Installation selon la revendication 12, **caractérisée en ce que** le module de rinçage comporte en outre un ensemble de racles permettant d'éliminer le produit de rinçage de la surface du support d'impression rincé avant son transfert dans le module de séchage

14. Installation selon la revendication 12, **caractérisée en ce que** le module de désencrage comporte en outre un ensemble de racles permettant d'éliminer le produit lessiviel de la surface du support d'impression traité avant le transfert dudit support dans le module de rinçage.

15. Installation, selon l'une quelconque des revendications précédentes 12 à 14, **caractérisée en ce que** le module de désencrage comporte en outre un système de chauffage permettant de chauffer le produit lessiviel.

16. Installation, selon l'une quelconque des revendications précédentes 12 à 15, **caractérisée en ce que** la module de désencrage comporte en outre, des moyens de régénération en continu du produit lessiviel.
